# FASCICULE DE BREVET EUROPEEN

(11) **EP 3 925 893 B1**
(45) Date de publication et mention de la délivrance du brevet: **03.08.2022**
(21) Numéro de dépôt: 21173400.9
(22) Date de dépôt: 11.05.2021
(51) Int. Cl.: B64F 5/60, G01M 3/02

(54) **PROCÉDÉ DE DÉPRESSURISATION D'UNE CABINE D'UN AÉRONEF AU SOL DEPUIS L'EXTÉRIEUR DE L'AÉRONEF**
VERFAHREN ZUR DRUCKENTLASTUNG EINER FLUGZEUGKABINE AM BODEN VON AUSSERHALB DES FLUGZEUGS
METHOD FOR DEPRESSURISING AN AIRCRAFT CABIN ON THE GROUND FROM THE OUTSIDE OF THE AIRCRAFT

(30) Priorité: 16.06.2020 FR 2006290
(43) Date de publication de la demande: 22.12.2021
(73) Titulaire: AIRBUS OPERATIONS (S.A.S.), 31060 Toulouse (FR)
(72) Inventeur: BRIQUET, Clément, 31060 TOULOUSE Cedex 9 (FR); AUVRAY, Brice, 31060 TOULOUSE Cedex 9 (FR)
(74) Mandataire: Gicquel, Olivier Yves Gérard

(56) Documents cités:
- GB-A- 854 021
- KR-U- 20090 007 375
- US-A- 5 404 747

## Description

La présente demande se rapporte à un procédé permettant de réduire le temps de dépressurisation d'une cabine d'un aéronef au sol depuis l'extérieur de l'aéronef, par exemple lors d'un essai de pressurisation.

Des essais de pressurisation sont généralement effectués au sol sur des aéronefs ayant subi des réparations structurelles, mais également pour détecter d'éventuelles fuites dans la structure de l'aéronef. Ces essais de pressurisation s'effectuent avec le groupe auxiliaire de puissance (« Auxiliary Power Unit », APU, en terminologie anglaise) de l'aéronef en fonctionnement, pour produire de l'énergie à bord de l'aéronef de manière à alimenter les différents systèmes de l'aéronef.

Au cours d'un essai de pressurisation d'un aéronef au sol, il n'est possible d'activer une dépressurisation d'urgence de la cabine de l'aéronef qu'au moyen de l'arrêt du fonctionnement de l'APU via une commande d'extinction d'urgence, par exemple située sur le train d'atterrissage avant (« Nose Landing Gear », NLG, en terminologie anglaise) de l'aéronef. L'arrêt de l'APU permet de dépressuriser la cabine de l'aéronef en fonction du taux de fuite naturel de l'aéronef. Le document GB854021 décrit une machine d'essai portable pour des systèmes à pression pneumatique variable comprenant, en combinaison, une pompe ayant des côtés de pression et d'aspiration, des moyens pour faire fonctionner ladite pompe, une paire de récipients sous pression de volumes sensiblement différents, des soupapes pour connecter sélectivement les côtés de pression et d'aspiration de ladite pompe avec lesdits récipients sous pression pour connecter les récipients sous pression avec lesdits instruments d'indication visuelle et les dispositifs à tester.

La présente invention vise à proposer une amélioration des moyens de dépressurisation d'urgence de la cabine d'un aéronef au sol depuis l'extérieur de l'aéronef.

A cet effet, l'invention a pour objet un procédé de dépressurisation d'une cabine d'un aéronef au sol depuis l'extérieur de l'aéronef, au moyen d'un système de dépressurisation comprenant une vanne de mise à l'air libre actionnable entre une position ouverte et une position fermée par l'intermédiaire d'un obturateur et reliée fluidiquement, par des moyens de raccordement, à une pompe à vide, l'aéronef étant muni d'une vanne de protection contre une surpression dans la cabine reliée à un port de prise de pression.

Selon l'invention, le procédé comprend les étapes consistant en :
- une connexion fluidique, par les moyens de raccordement, de la vanne de mise à l'air libre au port de prise de pression de l'aéronef, l'obturateur étant en position ouverte ;
- un déplacement de l'obturateur de la vanne de mise à l'air libre de sa position ouverte à sa position fermée ; et
- une activation de la pompe à vide pour réaliser une dépression dans le volume intérieur des moyens de raccordement et de la vanne de mise à l'air libre, de manière à créer une dépression au niveau du port de prise de pression de l'aéronef.

Avantageusement, le procédé selon l'invention permet de déclencher une dépressurisation rapide d'un aéronef au sol, notamment d'un aéronef sur lequel sont réalisés des essais de pressurisation, et ce, depuis l'extérieur de l'aéronef. En effet, le système de dépressurisation permet de simuler, grâce à la pompe à vide et avec l'obturateur de la vanne de mise à l'air libre en position fermée, une différence de pression, au niveau du port de prise de pression, entre l'intérieur et l'extérieur de l'aéronef, ce qui a pour conséquence de déclencher l'ouverture de la vanne de protection de l'aéronef, et donc une dépressurisation de la cabine.

Ce procédé permet ainsi d'améliorer la sécurité des essais de pressurisation d'un aéronef au sol, en permettant une dépressurisation rapide de la cabine de l'aéronef au sol, depuis l'extérieur de ce dernier.

Selon une autre caractéristique, l'aéronef comporte un groupe auxiliaire de puissance en fonctionnement. Selon cette caractéristique, le procédé comprend, avant l'étape de déplacement de l'obturateur, une étape consistant en un arrêt du groupe auxiliaire de puissance.

Selon une autre caractéristique, l'obturateur est muni d'un moyen de verrouillage configuré pour maintenir l'obturateur en position ouverte. Selon cette caractéristique, le procédé comprend, avant l'étape de déplacement de l'obturateur, une étape consistant en une désactivation du moyen de verrouillage, de manière à permettre un déplacement de l'obturateur de sa position ouverte à sa position fermée.

Selon une autre caractéristique, le moyen de verrouillage comprend un fil de plomb configuré pour maintenir l'obturateur en position ouverte. Selon cette caractéristique, l'étape de désactivation du moyen de verrouillage consiste en une coupure du fil de plomb.

Selon une autre caractéristique, le déplacement de l'obturateur entre sa position ouverte et sa position fermée est commandé électriquement, et la vanne de mise à l'air libre comporte un interrupteur ou un actionneur connecté électriquement à l'obturateur et configuré pour faire passer l'obturateur de sa position ouverte à sa position fermée. Selon cette caractéristique, le procédé comprend une étape consistant en un actionnement de l'interrupteur ou de l'actionneur de manière à faire passer l'obturateur de sa position ouverte à sa position fermée.

D'autres caractéristiques et avantages ressortiront de la description de l'invention qui va suivre, description donnée à titre d'exemple uniquement, en regard des dessins annexés parmi lesquels :
La figure 1 est une vue de côté d'un aéronef au sol sur lequel est connecté un système de dépressurisation qui illustre un mode de réalisation de l'invention,
La figure 2 est une vue schématique d'un système de dépressurisation qui illustre un mode de réalisation de l'invention, un obturateur d'une vanne de mise à l'air libre du système de dépressurisation étant en position ouverte,
La figure 3 est une vue schématique d'un système de dépressurisation qui illustre un mode de réalisation de l'invention, un obturateur d'une vanne de mise à l'air libre du système de dépressurisation étant en position fermée,
La figure 4 est une vue schématique d'un système de dépressurisation qui illustre un mode de réalisation de l'invention, dans un boîtier, et
La figure 5 représente un organigramme du procédé de dépressurisation d'une cabine d'un aéronef au sol depuis l'extérieur de l'aéronef, qui illustre un mode de réalisation de l'invention.

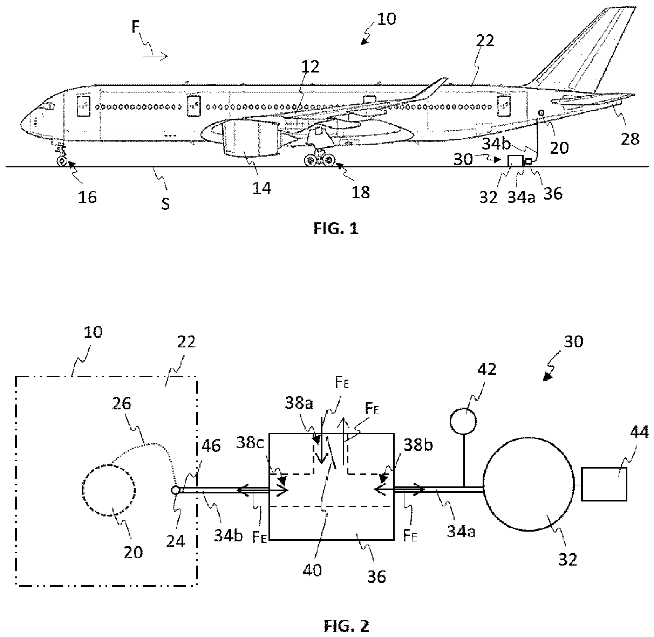

La figure 1 représente un aéronef 10 au sol, la ligne S représentant le sol, sur lequel est connecté un système de dépressurisation 30 de la cabine de l'aéronef. Le système de dépressurisation est agencé à l'extérieur de l'aéronef 10. L'aéronef 10 peut être un avion de ligne court, moyen ou long-courrier. L'aéronef 10 comporte une aile 12 sous laquelle est fixé un système de propulsion 14 comportant une turbomachine. L'aéronef 10 comporte également un groupe auxiliaire de puissance 28, situé à l'arrière de l'aéronef 10.

Dans la description qui suit, les termes relatifs à une position sont pris en référence au sens de déplacement de l'aéronef 10 lorsque la turbomachine fonctionne, ce sens de déplacement étant représenté par la flèche F.

L'aéronef 10 comporte au moins un train d'atterrissage, ici un train d'atterrissage avant 16 et un train d'atterrissage arrière 18.

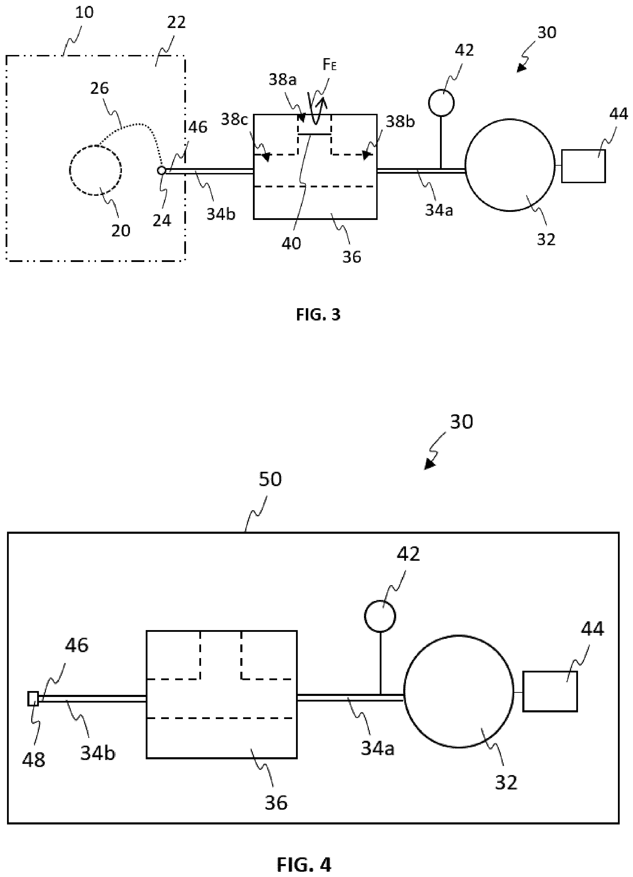

L'aéronef 10 est également muni, de manière classique, d'une vanne de protection 20 contre une surpression (« Overpressure Relief Valve », ORV, en terminologie anglaise) dans la cabine. La vanne de protection 20 est située sur le fuselage 22 à l'arrière de l'aéronef 10, et a pour fonction de protéger l'aéronef en cas de surpression dans la cabine. La vanne de protection 20 comprend, de manière connue, un port de prise de pression (référence 24 sur les figures 2 et 3), également situé sur le fuselage 22. Des moyens de liaison (représentés en pointillés sur les figures 2 et 3, référence 26) relient la vanne de protection 20 et le port de prise de pression 24. De manière classique, lorsqu'une différence de pression entre l'intérieur et l'extérieur de l'aéronef est trop importante (entre 700 mbar et 720 mbar), la vanne de protection 20 s'ouvre automatiquement, ce qui permet d'évacuer l'air de la cabine, et donc de la dépressuriser.

On entend par « cabine de l'aéronef », l'intérieur de l'aéronef, c'est-à-dire l'ensemble composé de la cabine où sont installés les passagers de l'aéronef, du poste de pilotage, des baies avioniques et du cockpit de l'aéronef.

Le système de dépressurisation 30 de la cabine de l'aéronef comporte une vanne de mise à l'air libre 36, actionnable entre une position ouverte et une position fermée par l'intermédiaire d'un obturateur (référence 40 sur les figures 2 et 3), et reliée d'une part à une pompe à vide 32 et d'autre part au port de prise de pression 24, via des moyens de raccordement 34a, 34b.

Le système de dépressurisation 30 est représenté plus précisément sur les figures 2 et 3.

La vanne de mise à l'air libre 36 comprend des première, deuxième et troisième voies 38a, 38b, 38c en communication fluidique les unes avec les autres.

L'obturateur 40 est agencé dans la première voie 38a, et est mobile entre une position ouverte (représentée sur la figure 2) dans laquelle un fluide extérieur F_{E} circule dans les voies 38a, 38b, 38c et les moyens de raccordement 34a, 34b, et une position fermée (représentée sur la figure 3) dans laquelle la circulation d'un fluide extérieur F_{E} dans les voies 38a, 38b, 38c et les moyens de raccordement 34a, 34b est bloquée. L'obturateur 40 peut être mobile en translation le long de la première voie 38a, ou être mobile en rotation dans la première voie 38a, comme représenté sur les figures 2 et 3. Le mouvement de l'obturateur 40 entre sa position ouverte et sa position fermée peut être commandé manuellement ou électriquement. Lorsque la commande est électrique, la vanne de mise à l'air libre 36 comporte un interrupteur ou un actionneur connecté électriquement à l'obturateur 40 et configuré pour faire passer l'obturateur de sa position ouverte à sa position fermée, et inversement. Afin de faire passer l'obturateur de sa position d'ouverture à sa position de fermeture, et inversement, il est nécessaire d'actionner l'interrupteur ou l'actionneur, qui actionne ensuite électriquement le déplacement de l'obturateur. Dans ce cas, la vanne de mise à l'air libre 36 est, de préférence, munie d'un capot de protection, agencé autour de l'interrupteur ou de l'actionneur, afin d'éviter une mauvaise manipulation, et donc une fermeture non souhaitée de l'obturateur 40.

La deuxième voie 38b de la vanne de mise à l'air libre 36 est reliée fluidiquement à la pompe à vide 32, via les moyens de raccordement 34a, et la troisième voie 38c de la vanne de mise à l'air libre 36 est configurée pour être reliée fluidiquement au port de prise de pression 24, via les moyens de raccordement 34b. A cet effet, les moyens de raccordement 34b comportent, à leur extrémité 46 destinée à être reliée au port de prise de pression 24, un raccord (référence 48 sur la figure 4) configuré pour s'adapter sur le port de prise de pression 24, par exemple un raccord à filetage conique.

Lorsque l'obturateur 40 est en position fermée, et lorsque la troisième voie 38c est connectée fluidiquement au port de prise de pression 24, l'air circule dans le volume intérieur des voies 38a, 38b, 38c et des moyens de raccordement 34a, 34b en circuit fermé.

Les moyens de raccordement 34a, 34b sont des tuyaux configurés pour supporter une dépression. Les moyens de raccordement 34a, 34b peuvent être des tuyaux pneumatiques flexibles renforcés, notamment généralement utilisés pour des essais anémométriques.

La pompe à vide 32 est configurée pour, en fonctionnement, aspirer l'air présent dans le volume intérieur délimité par les moyens de raccordement 34a, 34b et les voies 38a, 38b, 38c de la vanne de mise à l'air libre 36. La pompe à vide 32 est commandée électriquement. La pompe à vide 32 est connectée à un réservoir de vide 44.

Lorsque l'obturateur 40 est en position fermée, et lorsque la pompe à vide 32 est mise en fonctionnement, au moins une partie de l'air présent dans le volume intérieur des moyens de raccordement 34a, 34b et des voies 38a, 38b, 38c de la vanne de mise à l'air libre 36 est brusquement aspirée dans le réservoir à vide 44, créant ainsi rapidement une dépression dans ce volume intérieur.

Le système de dépressurisation 30 peut également comprendre un indicateur de pression 42, tel qu'un manomètre, configuré pour mesurer et afficher la pression dans les moyens de raccordement 34a, 34b et la vanne de mise à l'air libre 36.

Comme représenté sur la figure 4, le système de dépressurisation 30 est transportable. Autrement dit, le système de dépressurisation 30 comporte un boîtier 50, dans lequel sont disposés la pompe à vide 32, le réservoir de vide 44, l'indicateur de pression 42, la vanne de mise à l'air libre 36 et les moyens de raccordement 34a, 34b pour être transportés. Pour le transport du système de dépressurisation 30, les moyens de raccordement 34a, 34b peuvent être déconnectés de la pompe à vide 32 et de la vanne de mise à l'air libre 36.

Le fonctionnement du système de dépressurisation 30 tel que décrit ci-dessus, lors d'un procédé de dépressurisation d'une cabine d'un aéronef au sol, va maintenant être décrit.

Selon un mode de réalisation préféré, le système de dépressurisation 30 est, préalablement à un essai de pressurisation sur l'aéronef 10 au sol, raccordé au port de prise de pression 24, via les moyens de raccordement 34b. Le port de prise de pression 24 étant agencé sur le fuselage 22 de l'aéronef, donc en hauteur par rapport au sol S, l'opérateur connectant fluidiquement la troisième voie 38c de la vanne de mise à l'air libre 36 au port de prise de pression 24 peut utiliser n'importe quel dispositif d'élévation connu pour l'aider à établir cette connexion. Lors de cette connexion, l'obturateur 40 est en position ouverte, afin de préserver la fonction première de la vanne de protection 20, c'est-à-dire une protection contre une suppression dans la cabine de l'aéronef 10.

Lors de l'essai de pressurisation, le groupe auxiliaire de puissance 28 est en fonctionnement pour produire de l'énergie à bord de l'aéronef 10 de manière à alimenter les différents systèmes de l'aéronef, tels que la tension électrique, les pressions pneumatiques et hydrauliques, la ventilation...

En cas d'urgence, au cours d'un essai de pressurisation, un opérateur au sol, à l'extérieur de l'aéronef 10, commande l'arrêt du groupe auxiliaire de puissance 28. La commande d'extinction d'urgence du groupe auxiliaire de puissance 28 est par exemple située sur le train d'atterrissage avant 16. Le groupe auxiliaire de puissance 28 étant une source d'alimentation en air pour des dispositifs configurés pour pressuriser l'aéronef 10, afin de dépressuriser l'aéronef 10, il est nécessaire de cesser l'alimentation en air, et donc de couper le fonctionnement du groupe auxiliaire de puissance 28. Une fois le groupe auxiliaire de puissance 28 arrêté, les dispositifs configurés pour pressuriser l'aéronef 10 ne sont plus alimentés et s'arrêtent. Lors de l'utilisation du système de dépressurisation 30, l'arrêt du groupe auxiliaire de puissance 28 permet une dépressurisation plus rapide de la cabine de l'aéronef 10. En effet, si le groupe auxiliaire de puissance 28 est en fonctionnement lors de l'utilisation du système de dépressurisation 30, de l'air continuera d'arriver dans la cabine de l'aéronef, et un temps plus important sera alors nécessaire pour la dépressuriser entièrement.

Ensuite, l'obturateur 40 est déplacé de sa position ouverte à sa position fermée, puis la pompe à vide 32 est activée de manière à réaliser une dépression dans le volume intérieur délimité par les moyens de raccordement 34a, 34b et les voies 38a, 38b, 38c de la vanne de mise à l'air libre 36. La pompe à vide 32 est activée afin de créer une dépression au niveau du port de prise de pression 24.

En variante, afin d'éviter une mauvaise manipulation, l'obturateur 40 est muni d'un moyen de verrouillage configuré pour le maintenir en position ouverte. Le moyen de verrouillage permet, lors de la connexion du système de pressurisation 30 au port de prise de pression 24 de l'aéronef 10, de préserver la fonction première de la vanne de protection 20. En effet, la vanne de mise à l'air libre 36 permet de conserver la fonction première de la vanne de protection 20 de l'aéronef, qui est de protéger la cabine de l'aéronef contre une surpression lors d'une pressurisation. La vanne de protection 20 mesure, de façon continue, la pression extérieure, via le port de prise de pression 24. La vanne de mise à l'air libre 36 est ainsi en position sécurisée ouverte. Pour passer l'obturateur de sa position ouverte à sa position fermée, le moyen de verrouillage est désactivé.

Le moyen de verrouillage comprend un fil de plomb, agencé pour maintenir l'obturateur 40 en position ouverte. Pour passer l'obturateur de sa position ouverte à sa position fermée, le fil de plomb est coupé, ce qui libère le verrouillage de l'obturateur en position ouverte. En cas d'urgence, pour activer le système de dépressurisation 30, il est donc nécessaire de casser le fil de plomb, et de faire passer l'obturateur 40 de sa position ouverte à sa position fermée.

Selon cette variante, lorsque la vanne de mise à l'air libre 36 est commandée électriquement, le capot de protection est optionnel.

En variante, la vanne de mise à l'air libre 36 commandée électriquement est munie d'une double protection contre une mauvaise manipulation, à savoir du capot de protection et du moyen de verrouillage.

Selon un autre mode de réalisation, le système de dépressurisation 30 est connecté au port de prise de pression 24 de l'aéronef 10 uniquement si un cas d'urgence survient au cours de l'essai de pressurisation, notamment après l'arrêt du groupe auxiliaire de puissance 28. Dans ce cas, l'obturateur 40 pourra être en position fermée lors de la connexion du système de dépressurisation 30 au port de prise de pression 24 de l'aéronef 10. Dans tous les cas, l'obturateur 40 sera en position fermée lors de l'activation de la pompe à vide 32, afin d'avoir un circuit d'air fermé entre le port de prise de pression 24 et la pompe à vide 32.

Le système de dépressurisation 30 permet ainsi de simuler, via la pompe à vide 32, une différence de pression entre l'intérieur et l'extérieur de l'aéronef 10. Cette différence de pression est ressentie par le port de prise de pression 24, qui va alors commander une ouverture, de façon immédiate, de la vanne de protection 20 contre une surpression. La pompe à vide 32 est activée pour permettre l'ouverture de la vanne de protection 20, et pendant toute la durée de la dépressurisation de la cabine de l'aéronef 10, de manière à maintenir ouverte la vanne de protection 20 jusqu'à la dépressurisation complète de la cabine de l'aéronef 10. La vanne de protection 20 est maintenue ouverte jusqu'à la dépressurisation complète de la cabine de l'aéronef 10 car, par sa fonction première, la vanne de protection 20 régule la pression dans la cabine de l'aéronef sur la base d'une différence de pression entre l'intérieur et l'extérieur de l'aéronef. Si la différence de pression entre l'intérieur et l'extérieur de l'aéronef est en dessous d'un seuil prédéterminé, la vanne de protection 20 se referme. Pour cette raison, il est nécessaire de simuler une différence de pression entre l'intérieur et l'extérieur de l'aéronef suffisante pour maintenir la vanne de protection 20 en position ouverte jusqu'à la dépressurisation complète de la cabine de l'aéronef 10.

Une pompe à vide 32 commandée électriquement permet, par rapport à l'utilisation d'une pompe manuelle, d'éviter à un opérateur de devoir pomper en permanence jusqu'à la dépressurisation complète de la cabine de l'aéronef 10, mais aussi une dépressurisation plus rapide de la cabine de l'aéronef 10.

L'utilisation du système de dépressurisation 30 permet une dépressurisation rapide de la cabine de l'aéronef. Suite à cette dépressurisation, le personnel au sol, à l'extérieur de l'aéronef, réalisant ou surveillant l'essai de pressurisation, peut ouvrir les portes de l'aéronef et s'y introduire.

La puissance de la pompe à vide 32 nécessaire pour l'ouverture de la vanne de protection 20 diminue lorsque la pression dans la cabine de l'aéronef augmente. Par exemple, pour une pression cabine comprise entre 600 mbar et 700 mbar, une pression de la pompe à vide 32 comprise entre 60 mbar et 75 mbar est suffisante.

Comme la vanne de protection 20 doit être maintenue dans sa position d'ouverture jusqu'à ce que la cabine de l'aéronef soit entièrement dépressurisée, la pompe à vide 32 est configurée pour appliquer une pression négative par rapport à la pression atmosphérique. Par exemple, la pompe à vide 32 peut être configurée pour appliquer une pression négative comprise entre 660 mbar et 775 mbar (pour une pression cabine comprise entre 600 mbar et 700 mbar).

Le système de dépressurisation selon l'invention permet ainsi d'accélérer la dépressurisation d'une cabine d'un aéronef au sol depuis l'extérieur de l'aéronef, et donc d'améliorer la sécurité des essais de pressurisation.

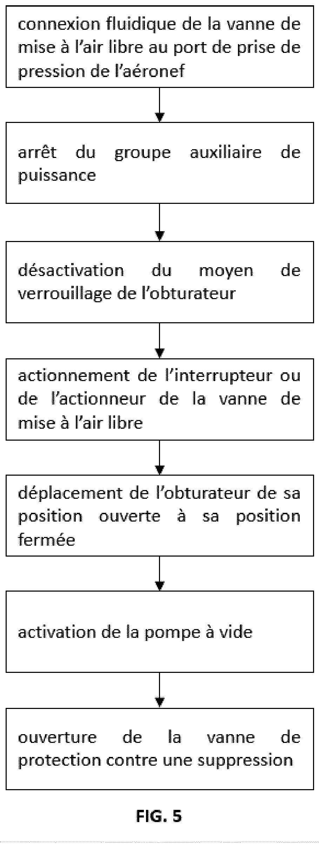

La figure 5 représente les différentes étapes du procédé de dépressurisation d'une cabine d'un aéronef 10 au sol depuis l'extérieur de l'aéronef, au moyen d'un système de dépressurisation 30 tel que décrit précédemment. Le procédé comprend ainsi une étape de connexion fluidique, par les moyens de raccordement 34a, 34b, de la vanne de mise à l'air libre 36 au port de prise de pression 24 de l'aéronef 10, l'obturateur 40 étant en position ouverte. Le procédé comprend ensuite une étape consistant en un arrêt du groupe auxiliaire de puissance. Bien entendu, le groupe auxiliaire de puissance peut être arrêté avant de connecter la vanne de mise à l'air libre 36 au port de prise de pression 24 de l'aéronef 10. Lorsque l'obturateur 40 est muni d'un moyen de verrouillage, le procédé comprend ensuite, une étape consistant en une désactivation du moyen de verrouillage. Par exemple, lorsque le moyen de verrouillage comporte un fil de plomb, la désactivation du moyen de verrouillage consiste en une coupure du fil de plomb. Ensuite, lorsque l'obturateur 40 est commandé électriquement, le procédé comprend une étape d'actionnement de l'interrupteur ou de l'actionneur de la vanne de mise à l'air libre 36, ce qui permet un déplacement de l'obturateur 40 de sa position ouverte à sa position fermée. Le procédé comprend ensuite une étape d'activation de la pompe à vide 32 pour réaliser une dépression dans le volume intérieur des moyens de raccordement 34a, 34b et de la vanne de mise à l'air libre 36, de manière à créer une dépression au niveau du port de prise de pression 24 de l'aéronef. Cette différence de pression simulée entre l'intérieur et l'extérieur de l'aéronef va permettre l'ouverture de la vanne de protection 20.

## Revendications

1. Procédé de dépressurisation d'une cabine d'un aéronef (10) au sol depuis l'extérieur de l'aéronef, au moyen d'un système de dépressurisation (30) comprenant une vanne de mise à l'air libre (36) actionnable entre une position ouverte et une position fermée par l'intermédiaire d'un obturateur (40) et reliée fluidiquement, par des moyens de raccordement (34a, 34b), à une pompe à vide (32), l'aéronef (10) étant muni d'une vanne de protection (20) contre une surpression dans la cabine reliée à un port de prise de pression (24), **caractérisé en ce que** le procédé comprend les étapes consistant en :
- une connexion fluidique, par les moyens de raccordement (34a, 34b), de la vanne de mise à l'air libre (36) au port de prise de pression (24) de l'aéronef (10), l'obturateur (40) étant en position ouverte ;
- un déplacement de l'obturateur (40) de la vanne de mise à l'air libre (36) de sa position ouverte à sa position fermée ; et
- une activation de la pompe à vide (32) pour réaliser une dépression dans le volume intérieur des moyens de raccordement (34a, 34b) et de la vanne de mise à l'air libre (36), de manière à créer une dépression au niveau du port de prise de pression (24) de l'aéronef.

2. Procédé selon la revendication 1, dans lequel l'aéronef comporte un groupe auxiliaire de puissance en fonctionnement, et **caractérisé en ce que** le procédé comprend, avant l'étape de déplacement de l'obturateur (40), une étape consistant en un arrêt du groupe auxiliaire de puissance.

3. Procédé selon l'une des revendications 1 ou 2, dans lequel l'obturateur (40) est muni d'un moyen de verrouillage configuré pour maintenir l'obturateur en position ouverte, et **caractérisé en ce que** le procédé comprend, avant l'étape de déplacement de l'obturateur (40), une étape consistant en une désactivation du moyen de verrouillage, de manière à permettre un déplacement de l'obturateur (40) de sa position ouverte à sa position fermée.

4. Procédé selon la revendication 3, dans lequel le moyen de verrouillage comprend un fil de plomb configuré pour maintenir l'obturateur en position ouverte, et **caractérisé en ce que** l'étape de désactivation du moyen de verrouillage consiste en une coupure du fil de plomb.

5. Procédé selon l'une des revendications 1 à 4, dans lequel le déplacement de l'obturateur (40) entre sa position ouverte et sa position fermée est commandé électriquement, et dans lequel la vanne de mise à l'air libre (36) comporte un interrupteur ou un actionneur connecté électriquement à l'obturateur (40) et configuré pour faire passer l'obturateur (40) de sa position ouverte à sa position fermée, et **caractérisé en ce que** le procédé comprend une étape consistant en un actionnement de l'interrupteur ou de l'actionneur de manière à faire passer l'obturateur (40) de sa position ouverte à sa position fermée.

## Patentansprüche

1. Verfahren zur Druckentlastung einer Kabine eines Luftfahrzeugs (10) am Boden von außerhalb des Luftfahrzeugs mittels eines Druckentlastungssystems (30), das ein Enlüftungsventil (36) umfasst, das mit Hilfe eines Verschlusses (40) zwischen einer offenen Position und einer geschlossenen Position betätigt werden kann und über Verbindungsmittel (34a, 34b) fluidisch mit einer Vakuumpumpe (32) verbunden ist, wobei das Luftfahrzeug (10) mit einem Schutzventil (20) gegen Überdruck in der Kabine versehen ist, das mit einem Druckanschluss (24) verbunden ist, **dadurch gekennzeichnet, dass** das Verfahren die in Folgendem bestehenden Schritte umfasst:
- Fluidverbindung des Enlüftungsventils (36) mit dem Druckanschluss (24) des Luftfahrzeugs (10) über die Verbindungsmittel (34a, 34b), wobei sich der Verschluss (40) in der offenen Position befindet;
- Bewegung des Verschlusses (40) des Enlüftungsventils (36) aus seiner offenen Position in seine geschlossene Position und
- Aktivierung der Vakuumpumpe (32), um im Innenvolumen der Verbindungsmittel (34a, 34b) und des Enlüftungsventils (36) einen Unterdruck zu erzeugen, so dass am Druckanschluss (24) des Luftfahrzeugs ein Unterdruck entsteht.

2. Verfahren nach Anspruch 1, wobei das Luftfahrzeug ein laufendes Hilfstriebwerk aufweist, und **dadurch gekennzeichnet, dass** das Verfahren vor dem Schritt der Bewegung des Verschlusses (40) einen Schritt umfasst, der im Anhalten des Hilfstriebwerks besteht.

3. Verfahren nach Anspruch 1 oder 2, wobei der Verschluss (40) mit einem Verriegelungsmittel versehen ist, das dazu konfiguriert ist, den Verschluss in der offenen Position zu halten, und **dadurch gekennzeichnet, dass** das Verfahren vor dem Schritt der Bewegung des Verschlusses (40) einen Schritt umfasst, der in einer Deaktivierung des Verriegelungsmittels besteht, um eine Bewegung des Verschlusses (40) aus seiner offenen Position in seine geschlossene Position zu ermöglichen.

4. Verfahren nach Anspruch 3, wobei das Verriegelungsmittel einen Bleidraht umfasst, der dazu konfiguriert ist, den Verschluss in der offenen Position zu halten, und **dadurch gekennzeichnet, dass** der Schritt der Deaktivierung des Verriegelungsmittels im Durchtrennen des Bleidrahts besteht.

5. Verfahren nach einem der Ansprüche 1 bis 4, wobei die Bewegung des Verschlusses (40) zwischen seiner offenen Position und seiner geschlossenen Position elektrisch gesteuert wird und wobei das Enlüftungsventil (36) einen Schalter oder Aktuator aufweist, der elektrisch mit dem Verschluss (40) verbunden und dazu konfiguriert ist, den Verschluss (40) aus seiner offenen Position in seine geschlossene Position zu bringen, und **dadurch gekennzeichnet, dass** das Verfahren einen Schritt umfasst, der in einer Betätigung des Schalters bzw. Aktuators besteht, um den Verschluss (40) aus seiner offenen Position in seine geschlossene Position zu bringen.

## Claims

1. Depressurizing method for a cabin of an aircraft (10) on the ground from the outer side of the aircraft, using a depressurizing system (30) comprising a venting valve (36) which can be actuated between an open position and a closed position by means of a shutter (40) and which is connected in fluid terms, via connection means (34a, 34b), to a vacuum pump (32), the aircraft (10) being provided with a protection valve (20) against excess pressure in the cabin which is connected to a pressure tap port (24), **characterized in that** the method comprises the steps involving:
- a fluid connection, via the connection means (34a, 34b), of the venting valve (36) to the pressure tap port (24) of the aircraft (10), the shutter (40) being in an open position;
- a movement of the shutter (40) of the venting valve (36) from the open position to the closed position thereof; and
- activation of the vacuum pump (32) in order to produce a reduced pressure in the inner volume of the connection means (34a, 34b) and the venting valve (36) in order to generate a reduced pressure in the region of the pressure tap port (24) of the aircraft.

2. Method according to Claim 1, wherein the aircraft comprises an auxiliary power unit which is operational, and **characterized in that** the method comprises, before the step of moving the shutter (40), a step involving a shutdown of the auxiliary power unit.

3. Method according to either Claim 1 or Claim 2, wherein the shutter (40) is provided with a locking means which is configured to hold the shutter in an open position, and **characterized in that** the method comprises, before the step of moving the shutter (40), a step involving a deactivation of the locking means in order to enable a movement of the shutter (40) from the open position to the closed position thereof.

4. Method according to Claim 3, wherein the locking means comprises a lead wire which is configured to retain the shutter in an open position, and **characterized in that** the step of deactivating the locking means involves cutting the lead wire.

5. Method according to one of Claims 1 to 4, wherein the movement of the shutter (40) between the open position and the closed position thereof is controlled electrically, and wherein the venting valve (36) comprises a switch or an actuator which is connected electrically to the shutter (40) and which is configured to move the shutter (40) from the open position to the closed position thereof, and **characterized in that** the method comprises a step involving activating the switch or the actuator in order to move the shutter (40) from the open position to the closed position thereof.
